# EUROPEAN PATENT APPLICATION

(11) **EP 4 549 849 A1**
(43) Date of publication of application: **07.05.2025**
(21) Application number: 24209967.9
(22) Date of filing: 30.10.2024
(51) Int. Cl.: F25D 11/00, B60H 1/00, B60H 1/32, F28D 20/02

(54) **METHOD FOR CONTROLLING A REFRIGERATED TRANSPORTATION SYSTEM AND REFRIGERATED TRANSPORTATION SYSTEM**

(30) Priority: 30.10.2023 CN 202311422123
(71) Applicant: Carrier Corporation, Palm Beach Gardens, FL 33418 (US)
(72) Inventor: XIE, Kangshan, Shanghai, 201206 (CN); CHEN, Linhui, Shanghai, 201206 (CN); BAO, Jiaqian, Shanghai, 201206 (CN)
(74) Representative: Dehns

(57) **Abstract**

A refrigerated transportation system (1) comprising:
a box (10);
a refrigeration unit (20) disposed corresponding to the box and including a first evaporator (21) and a second evaporator (22) connected in parallel, the second evaporator including a second evaporation coil (221) and a phase change material (223) coupled to the second evaporation coil;
a cold energy demand determination unit configured to acquire cold energy demand information of the box, generate a rapid cooling instruction when the cold energy demand information meets a preset rapid cooling condition, and generate an energy storage instruction when the cold energy demand information meets a preset energy storage condition;
a rapid cooling unit configured to cause the first evaporator and the second evaporator to simultaneously exchange heat with air in the box to release cold energy stored in the phase change material, in response to the rapid cooling instruction; and
an energy storage unit configured to cause the second evaporation coil to exchange heat with the phase change material so that the phase change material stores the cold energy, in response to the energy storage instruction.

## Description

### Technical Field

The present disclosure relates to the technical field of refrigerated transportation systems, in particular to a method for controlling a refrigerated transportation system, a refrigerated transportation system, and a computer-readable storage medium.

### Background Art

A refrigerated transportation system is used to transport goods that need to be stored at a low temperature, and can provide a low-temperature environment of about -20°C for the goods. However, in the related art, it is not easy to enable the refrigerated transportation system to provide the low-temperature environment described above. For example, it may be necessary to operate the refrigerated transportation system for a long period of time before the refrigerated transportation system can provide the low-temperature environment described above, or it may require high system operating costs (including energy costs, equipment costs, and the like) before the refrigerated transportation system can provide the low-temperature environment described above.

### Summary of the Invention

An object of the present disclosure is to provide a method for controlling a refrigerated transportation system, a refrigerated transportation system, and a computer-readable storage medium, so as to at least solve or alleviate some of the problems existing in the related art.

According to a first aspect of the invention there is provided a method for controlling a refrigerated transportation system, the refrigerated transportation system including a box and a refrigeration unit disposed corresponding to the box, the refrigeration unit including a first evaporator and a second evaporator connected in parallel, the second evaporator having a phase change material, the method including: a rapid cooling step of the first evaporator and the second evaporator simultaneously exchanging heat with air in the box to release cold energy stored in the phase change material.

In the method for controlling a refrigerated transportation system of an optional technical solution, the second evaporator includes a second evaporation coil, the phase change material is coupled to the second evaporation coil, and the method further includes: an energy storage step of the second evaporation coil exchanging heat with the phase change material so that the phase change material stores cold energy.

In the method for controlling a refrigerated transportation system of an optional technical solution, the refrigerated transportation system further includes a plug-in element capable of being coupled to an external power source, and the method further includes: an energy pre-storage step of the second evaporation coil exchanging heat with the phase change material so that the phase change material stores the cold energy when the plug-in element is coupled to the external power source.

In the method for controlling a refrigerated transportation system of an optional technical solution, the refrigerated transportation system further includes an on-board power source, and in the rapid cooling step and the energy storage step, power is provided to the refrigeration unit through the on-board power source.

In the method for controlling a refrigerated transportation system of an optional technical solution, the on-board power source includes a fuel cell, and in the energy storage step, operating power of the fuel cell is increased in a direction close to rated power of the fuel cell.

In the method for controlling a refrigerated transportation system of an optional technical solution, the method further includes: a cold energy demand determination step of acquiring cold energy demand information of the box, generating a rapid cooling instruction when the cold energy demand information meets a preset rapid cooling condition, and generating an energy storage instruction when the cold energy demand information meets a preset energy storage condition, in which the rapid cooling step further includes a step of responding to the rapid cooling instruction, and the energy storage step further includes a step of responding to the energy storage instruction.

In the method for controlling a refrigerated transportation system of an optional technical solution, in the cold energy demand determination step, the cold energy demand information includes a difference between a current temperature and a set temperature in the box, and according to a comparison result of the difference and a threshold, whether the preset rapid cooling condition is met and whether the preset energy storage condition is met are determined.

In the method for controlling a refrigerated transportation system of an optional technical solution, the box includes a first area and a second area, the first evaporator is disposed corresponding to the first area, and the second evaporator is disposed corresponding to the second area.

In the method for controlling a refrigerated transportation system of an optional technical solution, in the cold energy demand determination step, the cold energy demand information includes a first difference between a first area current temperature and a first area set temperature of the first area, and a second difference between a second area current temperature and a second area set temperature of the second area, and according to a comparison result of the first difference and the threshold and a comparison result of the second difference and the threshold, whether the preset energy storage condition is met is determined.

In the method for controlling a refrigerated transportation system of an optional technical solution, the preset energy storage condition is that the first difference reaches the threshold or/and the second difference reaches the threshold.

According to a second aspect of the invention there is provided a refrigerated transportation system including: a box; a refrigeration unit disposed corresponding to the box and including a first evaporator and a second evaporator connected in parallel, the second evaporator including a second evaporation coil and a phase change material coupled to the second evaporation coil; a processor; and a memory storing processor-readable instructions, the processor executing the following steps by running the processor-readable instructions: a cold energy demand determination step of acquiring cold energy demand information of the box, generating a rapid cooling instruction when the cold energy demand information meets a preset rapid cooling condition, and generating an energy storage instruction when the cold energy demand information meets a preset energy storage condition; a rapid cooling step of the first evaporator and the second evaporator simultaneously exchanging heat with air in the box to release cold energy stored in the phase change material, in response to the rapid cooling instruction; and an energy storage step of the second evaporation coil exchanging heat with the phase change material so that the phase change material stores the cold energy, in response to the energy storage instruction.

In the refrigerated transportation system of an optional technical solution, the refrigerated transportation system is a refrigerated vehicle, a refrigerated ship or a refrigerated container.

According to a third aspect of the invention there is provided a refrigerated transportation system, including: a box; a refrigeration unit disposed corresponding to the box and including a first evaporator and a second evaporator connected in parallel, the second evaporator including a second evaporation coil and a phase change material coupled to the second evaporation coil; a cold energy demand determination unit configured to acquire cold energy demand information of the box, generate a rapid cooling instruction when the cold energy demand information meets a preset rapid cooling condition, and generate an energy storage instruction when the cold energy demand information meets a preset energy storage condition; a rapid cooling unit configured to cause the first evaporator and the second evaporator to simultaneously exchange heat with air in the box to release cold energy stored in the phase change material, in response to the rapid cooling instruction; and an energy storage unit configured to cause the second evaporation coil to exchange heat with the phase change material so that the phase change material stores the cold energy, in response to the energy storage instruction.

According to a fourth aspect of the invention there is provided a computer-readable storage medium storing processor-readable instructions, wherein when the processor-readable instructions are executed by a processor, the method for controlling a refrigerated transportation system according to any of the above optional technical solutions is implemented.

According to the method for controlling a refrigerated transportation system, the refrigerated transportation system, and the computer-readable storage medium of the present disclosure, after the refrigerated transportation system operates for a short period of time, the refrigerated transportation system can provide a low-temperature environment that meets the needs of goods.

### Descriptions of the Drawings

Certain exemplary embodiments will now be described in greater detail by way of example only and with reference to the accompanying drawings in which:
FIG. 1 is a schematic structural diagram of a refrigerated transportation system,
FIG. 2 is a schematic structural diagram of a refrigeration unit,
FIG. 3 is a flowchart of a method for controlling the refrigerated transportation system,
FIG. 4 is a schematic structural diagram of the refrigerated transportation system, and
FIG. 5 is a flowchart of a method for controlling the refrigerated transportation system.

List of Reference Numerals: Refrigerated transportation system 1, box 10, first area 10A, second area 10B, front wall 11, partition plate 12, first area current temperature TA, first area set temperature T1, second area current temperature TB, second area set temperature T2, refrigeration unit 20, first evaporator 21, first evaporation coil 211, first fan 212, second evaporator 22, second evaporation coil 221, second fan 222, phase change material 223, condenser 23, compressor 24, expansion valves 25, 26, plug-in element 30, on-board power source 40, fuel cell 41, storage battery 42.

### Detailed Description

It should be noted that working principles, characteristics, advantages and the like of a method for controlling a refrigerated transportation system, a refrigerated transportation system, and a computer-readable storage medium according to the present disclosure will be described below in an illustrative manner. However, it should be understood that all descriptions are given for illustrative purposes only and therefore should not be construed as any limitation to the present disclosure.

In addition, for any single technical feature described or implied in the embodiments mentioned herein, or any single technical feature shown or implied in the accompanying drawings, the present disclosure still allows any combination or deletion between these technical features (or equivalents thereof) without any technical obstacles, thereby obtaining more other embodiments of the present disclosure that may not be directly mentioned herein. The scope of protection is defined by the appended claims.

### <Overview>

A method for controlling a refrigerated transportation system 1, the refrigerated transportation system 1, a computer-readable storage medium, and the like are shown with reference to generally the accompanying drawings, according to an exemplary embodiment. The method includes a rapid cooling step of causing a first evaporator 21 and a second evaporator 22 to simultaneously exchange heat with air in a box 10, so that after the refrigerated transportation system 1 operates for a short period of time, the refrigerated transportation system 1 can provide a low-temperature environment that meets the needs of goods.

### <Method for Controlling Refrigerated Transportation System with Single Temperature Area>

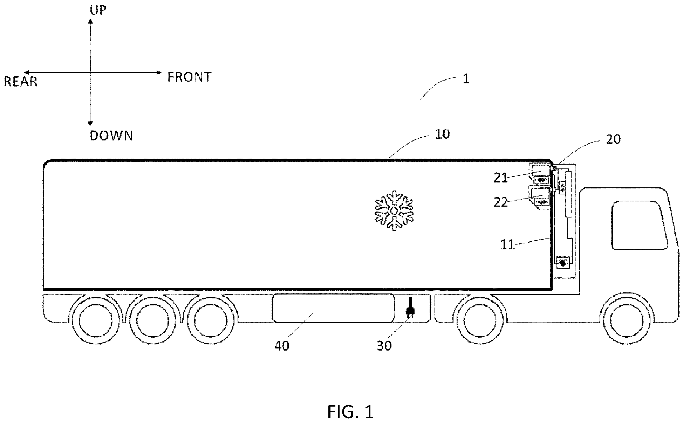

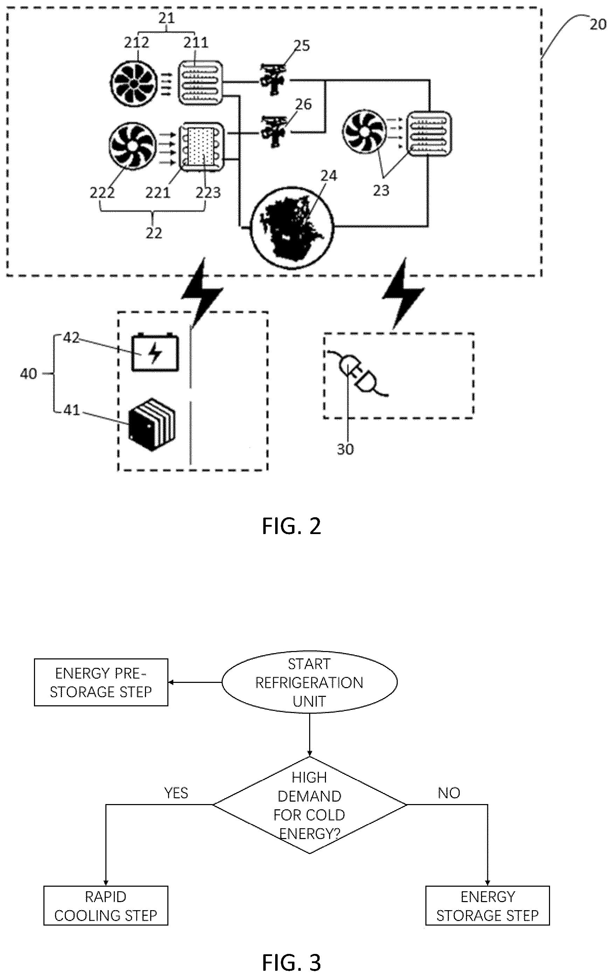

The refrigerated transportation system 1 according to the embodiment of the present disclosure includes a box 10 and a refrigeration unit 20 with reference to FIGS. 1 and 2. The refrigeration unit 20 includes a first evaporator 21 and a second evaporator 22 connected in parallel, and the second evaporator 22 has a phase change material 223. With reference to FIG. 3, the method for controlling the refrigerated transportation system 1 according to the embodiment of the present disclosure includes the rapid cooling step of causing the first evaporator 21 and the second evaporator 22 to simultaneously exchange heat with the air in the box 10 to release cold energy stored in the phase change material 223. By causing the first evaporator 21 and the second evaporator 22 to simultaneously exchange heat with the air in the box 10, after the refrigerated transportation system 1 operates for a short period of time, the refrigerated transportation system 1 can provide a low-temperature environment that meets the needs of goods.

Specifically, in the illustrated embodiment, the refrigerated transportation system 1 is a refrigerated vehicle. The refrigeration unit 20 includes a compressor 24, a condenser 23, and the first evaporator 21 and the second evaporator 22 connected in parallel. An expansion valve 25 is disposed between the condenser 23 and the first evaporator 21, and an expansion valve 26 is disposed between the condenser 23 and the second evaporator 22. Both the first evaporator 21 and the second evaporator 22 are disposed close to a front wall 11 of the box 10 to supply cold energy into the box 10. The first evaporator 21 includes a first evaporation coil 211 and a first fan 212. By starting the first fan 212, the first evaporation coil 211 exchanges heat with the air in the box 10. The second evaporator 22 includes a second evaporation coil 221, the phase change material 223 coupled to the second evaporation coil 221, and a second fan 222. By starting the second fan 222, the phase change material 223 storing the cold energy exchanges heat with the air in the box 10.

Although the refrigerated transportation system 1 is shown as a refrigerated vehicle in the illustrated embodiment, the present disclosure is not limited thereto, and any system that can be used to transport goods that need to be stored at a low temperature is within the scope of the present disclosure. In an alternative embodiment, the refrigerated transportation system 1 may be a refrigerated ship, a refrigerated container, or the like.

Although a structure and a mounting position of the refrigeration unit 20 are shown in the illustrated embodiment, the present disclosure is not limited thereto, and any refrigeration unit 20 capable of causing the first evaporator 21 and the second evaporator 22 connected in parallel to simultaneously exchange heat with the air in the box 10 is within the scope of the present disclosure. In an alternative embodiment, the refrigeration unit 20 may be mounted to a top wall of the box 10. In an alternative embodiment, only one fan may be provided in the refrigeration unit 20, and the refrigeration unit 20 may control the heat exchange between the first evaporator 21 and/or the second evaporator 22 and the air in the box 10 through two openable air outlets.

In some embodiments, the refrigeration unit 20 may perform a first refrigerant cycle and a second refrigerant cycle. In the first refrigerant cycle, a refrigerant discharged from the compressor 24 returns to the compressor 24 after passing through the condenser 23, the expansion valve 25 and the first evaporator 21. In the second refrigerant cycle, a refrigerant discharged from the compressor 24 returns to the compressor 24 after passing through the condenser 23, the expansion valve 26 and the second evaporator 22. In the rapid cooling step, the refrigeration unit 20 performs the first refrigerant cycle, that is, the refrigerant flows to the first evaporation coil 211 of the first evaporator 21, and at the same time, the first fan 212 operates at a high rotation speed, thereby increasing the cold energy supplied by the first evaporator 21 to the box 10. In the rapid cooling step, the refrigeration unit 20 does not perform the second refrigerant cycle, that is, the refrigerant does not flow through the expansion valve 26 and the second evaporator 22, but the second fan 222 operates at a high rotation speed, thereby promoting the phase change material 223 storing the cold energy to exchange heat with the air in the box 10, that is, the cold energy is supplied into the box 10 through the phase change material 223 disposed in the second evaporator 22.

Although the embodiment described above takes the example that the refrigeration unit 20 performs the first refrigerant cycle in the rapid cooling step to illustrate a refrigerant operation mode in the rapid cooling step, the present disclosure is not limited thereto, and any refrigerant operation mode capable of improving the total cold energy supplied by the first evaporator 21 and the second evaporator 22 into the box 10 is within the scope of the present disclosure.

For example, in the rapid cooling step, the refrigeration unit 20 may perform the first refrigerant cycle and the second refrigerant cycle at the same time, and the first evaporation coil 211 of the first evaporator 21 and the second evaporation coil 221 of the second evaporator 22 may cool the air in the box 10 and release the cold energy stored in the phase change material 223, so as to achieve the effect of rapid cooling more quickly.

In some embodiments, with reference to FIG. 3, the method includes a cold energy demand determination step of acquiring cold energy demand information of the box 10, generating a rapid cooling instruction when the cold energy demand information meets a preset rapid cooling condition, and generating an energy storage instruction when the cold energy demand information meets a preset energy storage condition, a rapid cooling step of causing the first evaporator 21 and the second evaporator 22 to simultaneously exchange heat with air in the box 10 to release the cold energy stored in the phase change material 223, in response to the rapid cooling instruction, and an energy storage step of causing the second evaporation coil 221 to exchange heat with the phase change material 223 so that the phase change material 223 stores cold energy, in response to the energy storage instruction.

Specifically, in the cold energy demand determination step, the cold energy demand information of the box 10 is acquired. The cold energy demand information here refers to information that can reflect the demand for cold energy in the box 10, and generally may include information on a current temperature and a set temperature information of the box 10, information on an external environment temperature, and the like. In a case in which the set temperature is constant, the higher the current temperature in the box 10, the larger the demand for cold energy in the box 10, and the higher the external environment temperature, the larger the demand for cold energy in the box 10. When the demand for cold energy in the box 10 is large, the cold energy demand information meets the preset rapid cooling condition, and when the demand for cold energy in the box 10 is small, the cold energy demand information meets the preset energy storage condition.

When the cold energy demand information meets the preset energy storage condition, an energy storage instruction is generated and the energy storage step is performed. In the energy storage step, the refrigeration unit 20 may perform the first refrigerant cycle and the second refrigerant cycle, that is, that is, part of a refrigerant flows to the first evaporation coil 211 of the first evaporator 21 for adjusting or maintaining the temperature inside the box 10, and part of the refrigerant flows to the second evaporation coil 221 of the second evaporator 22 for exchanging heat with the phase change material 223 to implement cold energy storage of the phase change material 223. In the energy storage step, the first evaporator 21 is used to adjust or maintain the temperature in the box 10, specifically, the first evaporator 21 may change the amount of cold air supplied by the first evaporator 21 to the box 10 by adjusting a rotation speed of the first fan 212.

In some embodiments, the cold energy demand information includes a difference between the current temperature and the set temperature in the box 10, and according to a comparison result of the difference and a threshold, whether the preset rapid cooling condition is met and whether the preset energy storage condition is met are determined. For example, when the set temperature is -20°C, if the current temperature in the box 10 is 20°C, the difference between the current temperature and the set temperature in the box 10 is 40, which is large and greater than a threshold (assuming that the threshold is 10), the preset rapid cooling condition is met, and the rapid cooling instruction is generated. If the current temperature in the box 10 is -10°C, the difference between the current temperature and the set temperature in the box 10 is 10, which is small and less than or equal to the threshold (assuming that the threshold is 10), the preset energy storage condition is met, and the energy storage instruction is generated.

In the energy storage step, the second evaporation coil 221 exchanges heat with the phase change material 223, so that the phase change material 223 stores the cold energy. The first evaporation coil 211 exchanges heat with the air in the box 10, so that the temperature in the box 10 is further reduced from -10°C to -20°C and the temperature in the box 10 reaches the set temperature. After the temperature in the box 10 reaches the set temperature, the first fan 212 of the first evaporator 21 may be shut down to prevent the temperature in the box 10 from being too low to adversely affect the goods therein.

In some embodiments, the refrigerated transportation system 1 includes an on-board power source 40, and a plug-in element 30 that can be coupled to an external power source. When the refrigerated transportation system 1 is in transit, the on-board power source 40 provides power to the refrigerated transportation system 1 including the refrigeration unit 20. When the refrigerated transportation system 1 is not in transit, the plug-in element 30 is coupled to an external power source to provide power to the refrigeration unit 20. For example, the energy pre-storage step may be performed to allow the second evaporation coil 221 to exchange heat with the phase change material 223, so that the phase change material 223 stores the cold energy. Specifically, a plug-in element may be coupled to a power grid at night, valley electricity at night can be used to provide power the refrigeration unit 20, so that the phase change material 223 stores the cold energy. The phase change material 223 storing the cold energy can be used to exchange heat with the air in the box 10 in the rapid cooling step, thereby facilitating reduction of operating costs of the refrigerated transportation system 1.

In some embodiments, in the rapid cooling step and the energy storage step, the on-board power source 40 provides power to the refrigeration unit 20. The on-board power source 40 may include a fuel cell 41 and a storage battery 42 used in conjunction with the fuel cell 41. In the energy storage step, operating power of the fuel cell 41 is increased in a direction close to rated power of the fuel cell 41. When the demand for cold energy in the box 10 is small, energy consumption of the fuel cell 41 is low, and the fuel cell 41 does not work within the rated power range, resulting in low efficiency of the fuel cell 41. Therefore, by performing the energy storage step, the fuel cell 41 provides power for the refrigeration unit 20, so that the phase change material 223 stores the cold energy, thereby increasing the energy consumption of the fuel cell 41, and causing the fuel cell 41 to work within the rated power range, thereby improving the efficiency. When the demand for cold energy in the box 10 is large, effective heat exchange between the phase change material 223 storing the cold energy and the air in the box 10 alleviates the problem of battery overheating caused by the increased energy consumption of the fuel cell 41, which is beneficial to the compact design of the fuel cell 41.

In some embodiments, the on-board power source 40 is a diesel engine. In a specific embodiment, part of the power of the diesel engine is used to drive a generator to generate electricity, and the electricity generated by the diesel engine is used to drive electrical equipment such as fans and controllers. The other part of the power of the diesel engine is driven by a belt-driven compressor. The compressor mentioned here is an open compressor, which is not driven by electricity, but by pulleys and belts.

### <Method for Controlling Refrigerated Transportation System with Multiple Temperature Areas>

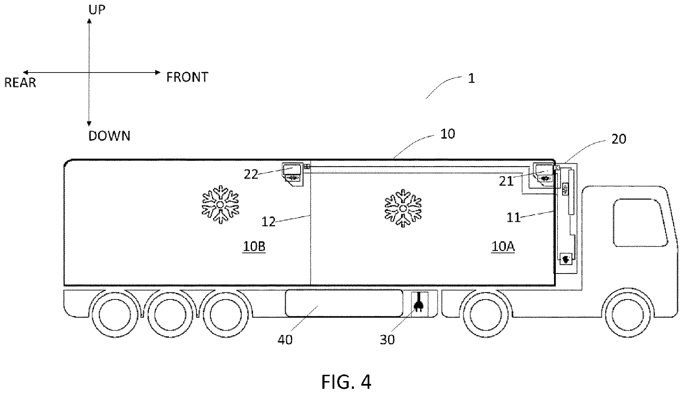

The refrigerated transportation system 1 according to the embodiment of the present disclosure, as shown in FIGS. 2 and 4, includes the box 10 and the refrigeration unit 20. The box 10 includes a first area 10A and a second area 10B isolated from each other, and the refrigeration unit 20 includes the first evaporator 21 and the second evaporator 22 connected in parallel. The second evaporator 22 includes the second evaporation coil 221, and the second evaporation coil 221 is coupled to the phase change material 223. The first evaporator 21 is disposed corresponding to the first area 10A, and the second evaporator 22 is disposed corresponding to the second area 10B. The method for controlling the refrigerated transportation system 1 according to the embodiment of the present disclosure includes the cold energy demand determination step of acquiring the cold energy demand information of the box 10, generating a rapid cooling instruction when the cold energy demand information meets the preset rapid cooling condition, and generating an energy storage instruction when the cold energy demand information meets the preset energy storage condition, the rapid cooling step of causing the first evaporator 21 and the second evaporator 22 to simultaneously exchange heat with the air in the box 10 to release the cold energy stored in the phase change material 223, in response to the rapid cooling instruction, and the energy storage step of causing the second evaporation coil 221 to exchange heat with the phase change material 223 so that the phase change material 223 stores cold energy, in response to the energy storage instruction.

Specifically, the box 10 is divided into the first area 10A and the second area 10B by a partition plate 12, and set temperatures of the first area 10A and the second area 10B can be controlled separately. The first area 10A and the second area 10B may be disposed inside the box 10 in a front-back manner, or disposed inside the box 10 in an up-down manner. The refrigeration unit 20 includes the compressor 24, the condenser 23, the first evaporator 21 and the second evaporator 22 connected in parallel. The expansion valve 25 is disposed between the condenser 23 and the first evaporator 21, and the expansion valve 26 is disposed between the condenser 23 and the second evaporator 22. The first evaporator 21 is disposed close to the front wall 11 of the box 10 to supply cold energy to the first area 10A in the box 10, and the second evaporator 22 is disposed close to the partition plate 12 of the box 10 to supply cold energy to the second area 10B in the box 10. The first evaporator 21 includes the first evaporation coil 211 and the first fan 212. By starting the first fan 212, the first evaporation coil 211 exchanges heat with the air in the first area 10A. The second evaporator 22 includes the second evaporation coil 221, the phase change material 223 coupled to the second evaporation coil 221, and the second fan 222. By starting the second fan 222, the phase change material 223 storing the cold energy exchanges heat with the air in the second area 10B.

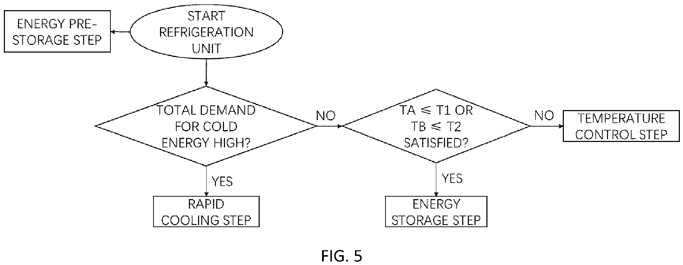

In some embodiments, with reference to FIG. 5, the cold energy demand information includes a first difference between a first area current temperature TA and a first area set temperature T1, and a second difference between a second area current temperature TB and a second area set temperature T2. The first difference reflects the demand for cold energy in the first area 10A, and the second difference reflects the demand for cold energy in the second area 10B. By combining the first difference and the second difference, the total demand for cold energy in the box 10 can be known, and the total demand for cold energy in the box 10 can be divided into two levels, namely, high total demand for cold energy and low total demand for cold energy.

When the total demand for cold energy is high, the preset rapid cooling condition is met, the rapid cooling instruction is generated, and the rapid cooling step is performed, that is, the first evaporator 21 exchanges heat with the air in the box 10, and at the same time, the second evaporator 22 exchanges heat with the air in the box 10.

When the total demand for cold energy is low, and both the first difference and the second difference are greater than 0, that is, when the first area current temperature TA is greater than the first area set temperature T1 and the second area current temperature TB is greater than the second area set temperature T2, a preset temperature control condition is met, a temperature control instruction is generated, and a temperature control step is performed, that is, the first evaporator 21 exchanges heat with the air in the box 10, and at the same time, the second evaporator 22 exchanges heat with the air in the box 10.

When the total demand for cold energy is low, and at least one of the first difference and the second difference is less than or equal to 0, that is, when the first area current temperature TA reaches the first area set temperature T1 or the second area current temperature TB reaches the second area set temperature T2, the preset energy storage condition is met, the energy storage instruction is generated, and the energy storage step is performed.

In the energy storage step, when the first area current temperature TA reaches the first area set temperature T1 and the second area current temperature TB does not reach the second area set temperature T2 (TA ≤ T1 and TB > T2), the first evaporator 21 is shut down, the second evaporator 22 stores cold energy and exchanges heat with the air in the box 10, that is, the first fan 212 is shut down, the second evaporation coil 221 exchanges heat with the phase change material 223 so that the phase change material 223 stores cold energy, and at the same time, the phase change material 223 exchanges heat with the air in the box 10 to release the cold energy stored in the phase change material 223. When the first area current temperature TA does not reach the first area set temperature T1 and the second area current temperature TB reaches the second area set temperature T2 (TA > T1 and TB ≤ T2), the first evaporator 21 exchanges heat with the air in the box 10, the second evaporator 22 stores cold energy, that is, the first fan 212 operates, the second fan 222 is shut down, and the second evaporation coil 221 exchanges heat with the phase change material 223 so that the phase change material 223 stores cold energy. When the first area current temperature TA reaches the first area set temperature T1 and the second area current temperature TB reaches the second area set temperature T2 (TA ≤ T1 and TB ≤ T2), the first evaporator 21 is shut down, the second evaporator 22 stores cold energy, that is, the first fan 212 is shut down, the second fan 222 is shut down, and the second evaporation coil 221 exchanges heat with the phase change material 223, so that the phase change material 223 stores cold energy.

### <Refrigerated Transportation System>

The refrigerated transportation system 1 according to an embodiment of the present disclosure includes: a box 10; a refrigeration unit 20 including a first evaporator 21 and a second evaporator 22 connected in parallel, the second evaporator 22 including a second evaporation coil 221, the second evaporation coil 221 being coupled with a phase change material 223; a processor; and a memory storing processor-readable instructions, the processor executing the following steps by running the processor-readable instructions: a cold energy demand determination step of acquiring cold energy demand information of the box 10, generating a rapid cooling instruction when the cold energy demand information meets a preset rapid cooling condition, and generating an energy storage instruction when the cold energy demand information meets a preset energy storage condition, a rapid cooling step of causing the first evaporator 21 and the second evaporator 22 to simultaneously exchange heat with air in the box 10 to release cold energy stored in the phase change material 223, in response to the rapid cooling instruction, and an energy storage step of causing the second evaporation coil 221 to exchange heat with the phase change material 223 so that the phase change material 223 stores cold energy, in response to the energy storage instruction.

The refrigerated transportation system 1 according to another embodiment of the present disclosure includes: a box 10; a refrigeration unit 20 including a first evaporator 21 and a second evaporator 22 connected in parallel, the second evaporator 22 including a second evaporation coil 221, the second evaporation coil 221 being coupled with a phase change material 223; a cold energy demand determination unit configured to acquire cold energy demand information of the box 10, generate a rapid cooling instruction when the cold energy demand information meets a preset rapid cooling condition, and generate an energy storage instruction when the cold energy demand information meets a preset energy storage condition; a rapid cooling unit configured to cause the first evaporator 21 and the second evaporator 22 to simultaneously exchange heat with air in the box 10 to release cold energy stored in the phase change material 223, in response to the rapid cooling instruction; and an energy storage unit configured to cause the second evaporation coil 221 to exchange heat with the phase change material 223 so that the phase change material 223 stores cold energy, in response to the energy storage instruction.

### <Computer-readable Storage Medium>

The computer-readable storage medium according to an embodiment of the present disclosure stores processor-readable instructions, and when the processor-readable instructions are executed by a processor, the method for controlling the refrigerated transportation system described in the above embodiments is implemented.

The above embodiments are merely preferred embodiments of the present disclosure and are not intended to limit the present disclosure. The skilled person will appreciate that modifications may be made within the scope of the claims. The scope of protection is defined by the appended claims.

## Claims

1. A method for controlling a refrigerated transportation system (1), the refrigerated transportation system including a box (10) and a refrigeration unit (20) disposed corresponding to the box, the refrigeration unit including a first evaporator (21) and a second evaporator (22) connected in parallel, the second evaporator having a phase change material (223), the method comprising:
a rapid cooling step of the first evaporator and the second evaporator simultaneously exchanging heat with air in the box to release cold energy stored in the phase change material.

2. The method for controlling a refrigerated transportation system according to claim 1, wherein the second evaporator includes a second evaporation coil (221), the phase change material is coupled to the second evaporation coil, and
the method further comprises:
an energy storage step of the second evaporation coil exchanging heat with the phase change material so that the phase change material stores cold energy.

3. The method for controlling a refrigerated transportation system according to claim 2, wherein the refrigerated transportation system further includes a plug-in element (3) capable of being coupled to an external power source, and the method further comprises:
an energy pre-storage step of the second evaporation coil exchanging heat with the phase change material so that the phase change material stores the cold energy when the plug-in element is coupled to the external power source.

4. The method for controlling a refrigerated transportation system according to claim 2 or 3, wherein the refrigerated transportation system further includes an on-board power source (40), and
in the rapid cooling step and the energy storage step, power is provided to the refrigeration unit through the on-board power source.

5. The method for controlling a refrigerated transportation system according to claim 4, wherein the on-board power source includes a fuel cell (41), and
in the energy storage step, operating power of the fuel cell is increased in a direction close to rated power of the fuel cell.

6. The method for controlling a refrigerated transportation system according to any one of claims 2 to 5, further comprising:
a cold energy demand determination step of acquiring cold energy demand information of the box, generating a rapid cooling instruction when the cold energy demand information meets a preset rapid cooling condition, and generating an energy storage instruction when the cold energy demand information meets a preset energy storage condition, wherein
the rapid cooling step further includes a step of responding to the rapid cooling instruction, and
the energy storage step further includes a step of responding to the energy storage instruction.

7. The method for controlling a refrigerated transportation system according to claim 6, wherein in the cold energy demand determination step, the cold energy demand information includes a difference between a current temperature and a set temperature in the box, and according to a comparison result of the difference and a threshold, whether the preset rapid cooling condition is met and whether the preset energy storage condition is met are determined.

8. The method for controlling a refrigerated transportation system according to any preceding claim, wherein the box includes a first area (10A) and a second area (10B), the first evaporator is disposed corresponding to the first area, and the second evaporator is disposed corresponding to the second area.

9. The method for controlling a refrigerated transportation system according to claim 8, wherein in the cold energy demand determination step, the cold energy demand information includes a first difference between a first area current temperature (TA) and a first area set temperature (T1) of the first area, and a second difference between a second area current temperature (TB) and a second area set temperature (T2) of the second area, and according to a comparison result of the first difference and the threshold and a comparison result of the second difference and the threshold, whether the preset energy storage condition is met is determined.

10. The method for controlling a refrigerated transportation system according to claim 9, wherein the preset energy storage condition is that the first difference reaches the threshold or/and the second difference reaches the threshold.

11. A refrigerated transportation system (1) comprising:
a box (10);
a refrigeration unit (20) disposed corresponding to the box and including a first evaporator (21) and a second evaporator (22) connected in parallel, the second evaporator including a second evaporation coil (221) and a phase change material (223) coupled to the second evaporation coil;
a cold energy demand determination unit configured to acquire cold energy demand information of the box, generate a rapid cooling instruction when the cold energy demand information meets a preset rapid cooling condition, and generate an energy storage instruction when the cold energy demand information meets a preset energy storage condition;
a rapid cooling unit configured to cause the first evaporator and the second evaporator to simultaneously exchange heat with air in the box to release cold energy stored in the phase change material, in response to the rapid cooling instruction; and
an energy storage unit configured to cause the second evaporation coil to exchange heat with the phase change material so that the phase change material stores the cold energy, in response to the energy storage instruction.

12. The refrigerated transportation system according to claim 11, wherein the refrigerated transportation system is a refrigerated vehicle, a refrigerated ship or a refrigerated container.

13. A computer-readable storage medium storing processor-readable instructions,
wherein when the processor-readable instructions are executed by a processor, the method for controlling a refrigerated transportation system (1) according to any one of claims 1 to 10 is implemented.
